# EUROPEAN PATENT APPLICATION

(11) **EP 4 832 226 A1**
(43) Date of publication of application: **28.10.2026**
(21) Application number: 24928038.9
(22) Date of filing: 28.08.2024
(51) Int. Cl.: H01M 50/471, H01M 50/242

(54) **BATTERY, PRESSURE CONTROL UNIT, BATTERY PACK, ELECTRICAL DEVICE AND ENERGY STORAGE DEVICE**

(30) Priority: 06.03.2024 CN 202410254514
(71) Applicant: Contemporary Amperex Technology Co., Limited, Ningde, Fujian 352100 (CN)
(72) Inventor: HE, Runyong, Ningde, Fujian 352100 (CN); LONG, Chao, Ningde, Fujian 352100 (CN); CHEN, Xingdi, Ningde, Fujian 352100 (CN)
(74) Representative: Straus, Alexander
(86) International application number: PCT/CN2024/115163
(87) International publication number: WO 2025/185107

(57) **Abstract**

A battery, a pressure control unit, a battery pack, a power consuming device, and an energy storage device. The battery comprises a case assembly, at least one battery cell and at least one pressure control unit. The battery cell is accommodated in the case assembly, the battery cell comprising electrode assemblies stacked in a first direction. The pressure control unit comprises a fluid pouch, an accommodating cavity being formed in the fluid pouch; a fluid medium is accommodated in the accommodating cavity, such that the fluid pouch can contract or expand through flow of the fluid medium, thereby applying acting force to the battery cell by means of fluid pressure generated by the fluid medium. The pressure control unit applies acting force to the battery cell at least in an expanded state of the battery cell, so as to control the surface stress of the expanded battery cell.

## Description

### CROSS-REFERENCE TO RELATED APPLICATIONS

The present disclosure claims priority to Chinese Patent Application No. 202410254514.3, filed on March 6, 2024 and entitled "BATTERY, PRESSURE CONTROL UNIT, BATTERY PACK, POWER CONSUMING DEVICE, AND ENERGY STORAGE DEVICE", which is incorporated into the present disclosure by reference in its entirety.

### TECHNICAL FIELD

The present disclosure relates to the field of battery technologies, and in particular, to a battery, a pressure control unit, a battery pack, a power consuming device, and an energy storage device.

### BACKGROUND

New energy batteries are increasingly widely used in daily life and industry. For example, new energy vehicles equipped with batteries have been widely used. In addition, batteries are increasingly applied in fields such as energy storage.

In a battery, battery cells may experience an increase in volume and swell during the charge-discharge cycles. If excessive force occurs between battery cells due to swelling, undesirable situations such as excessive compression of the battery cells and stress concentration may occur, which negatively affect the cycle life and performance of the battery. Therefore, how to reduce risks caused by the swelling of battery cells has become one of the research topics in the industry.

### SUMMARY

To address the above technical issues, the present disclosure provides a battery, a pressure control unit, a battery pack, a power consuming device, and an energy storage device capable of controlling the stress on a surface of a swollen battery cell.

The present disclosure is implemented through the following technical solutions.

A first aspect of the present disclosure provides a battery. The battery includes: a housing assembly; at least one battery cell accommodated in the housing assembly, the battery cell including electrode assemblies stacked along a first direction; and at least one pressure control unit, the pressure control unit including a fluid bladder, an accommodating cavity being formed inside the fluid bladder, the accommodating cavity accommodating a fluid medium, and the fluid bladder being capable of contracting or expanding through flow of the fluid medium to apply a force to the battery cell through fluid pressure generated by the fluid medium; where the pressure control unit applies the force to the battery cell, at least when the battery cell swells, to control stress on a surface of the swollen battery cell.

Since the battery includes the pressure control unit, when the battery cell is swollen, the battery cell applies a force to the pressure control unit, and the pressure control unit applies a reaction force to the swollen battery cell, thereby reducing the swelling degree of the battery cell and mitigating the risks caused by swelling, which is beneficial for prolonging the cycle life of the battery.

In addition, since the pressure control unit includes the fluid bladder, an accommodating cavity is formed inside the fluid bladder, the accommodating cavity accommodates a fluid medium, and the fluid bladder can contract or expand through flow of the fluid medium. Therefore, the fluid bladder can adjust the pressure generated by the fluid in the accommodating cavity on the bladder wall of the fluid bladder according to the swelling degree of the battery cell, to apply an appropriate (swelling restraining force to the battery cell and provide an appropriate swelling space for the battery cell, thereby controlling the stress on the surface of the swollen battery cell. In this way, the swelling force of the battery cell can be uniformly released, reducing the possibility of the battery cell undergoing free swelling, further making the force on the surface of the battery cell along a stacking direction of the electrode assemblies more uniform and reducing polarization accumulation of the battery cell, which is beneficial for improving the performance of the battery.

In some embodiments, the battery cell includes surfaces facing each other along the first direction, and at least when the battery cell swells, an average stress on the same surface of the same battery cell is within a range from 0.1 MPa to 2 MPa.

Accordingly, the pressure control unit may apply a swelling restraining force to the battery cell, so as to control the average stress on the surfaces of the battery cell facing each other along the first direction within an appropriate range, so that the average stress on the same surface can be maintained within an appropriate range, which is beneficial for prolonging the cycle life of the battery cell and thereby improving the performance of the battery.

In some embodiments, for the same surface of the same battery cell, a value of a minimum stress calculated per unit area divided by a maximum stress calculated per unit area at a same moment is greater than 50%.

Accordingly, the force on the surface of the battery cell can be made more uniform, the possibility of stress concentration can be reduced, so that the battery cell has a favorable stress environment during the cycle process, thereby reducing the possibility of lithium plating in the battery cell, improving the performance of the battery, and prolonging the service life of the battery.

In some embodiments, a maximum pressure that the pressure control unit can apply is within a range from 200 N to 4000 N.

Accordingly, the pressure control unit can apply a relatively large swelling restraining force to the battery cell and control the swelling restraining force to be within an appropriate range, thereby effectively resisting the swelling force of the battery cell. Even when the swelling force of the battery cell is relatively large, the average stress on the surface (for example, a large surface) of the battery cell can still be maintained within an appropriate range. Moreover, since the maximum pressure that the pressure control unit can apply is relatively large, it is less likely that elastic failure occurs such that the pressure control unit cannot rebound and thus cannot continue to provide an appropriate swelling restraining force to the battery cell.

In some embodiments, the fluid bladder includes an inlet and an outlet. The inlet and the outlet are in communication with the accommodating cavity, the inlet is configured for the fluid medium to flow into the accommodating cavity from outside, and the outlet is configured for the fluid medium to flow out of the accommodating cavity. The fluid bladder can expand or contract through inflow or outflow of the fluid medium.

Since the fluid bladder includes the inlet and the outlet, and can respectively allow the fluid medium to flow into the accommodating cavity or make the fluid medium flow out of the accommodating cavity through the inlet and the outlet, an appropriate amount of fluid medium can flow into or out of the accommodating cavity according to the swelling degree of the battery cell. The force applied to the surface of the battery cell can be adjusted through different pressures generated by different amounts of fluid medium, so that while the swelling of the battery cell is limited, an appropriate swelling space can be provided for the battery cell, reducing the possibility of stress concentration and maintaining the structural stability of the battery.

In some embodiments, the battery further includes a top cover assembly. The top cover assembly is located on one side of the housing assembly along a second direction, and the inlet and the outlet are arranged to face an opposite side in the second direction from the top cover assembly. The second direction is perpendicular to the first direction.

The inlet and the outlet of the fluid bladder need to extend out of the housing assembly to communicate with an external fluid medium supply device. Therefore, the inlet and the outlet being arranged on an opposite side in the second direction from the top cover assembly facilitates the installation of the top cover assembly. The inlet and the outlet do not affect the connection between the battery cell and the connection member of the top cover assembly, and the top cover assembly does not need to reserve additional holes for the inlet and the outlet to pass through, thereby reducing assembly difficulty and production costs.

In some embodiments, the fluid bladder further includes at least one baffle. The baffle is located in the accommodating cavity and is configured to divide the accommodating cavity into at least two spaced regions, and the spaced regions are in communication with each other and form a tortuous fluid medium flow channel.

Accordingly, the fluid medium in the accommodating cavity can flow along the tortuous flow channel for the fluid medium, which exerts a certain cooling effect on the surface of the battery cell while reducing the swelling of the battery cell, so as to carry away the heat from the battery cell and achieve heat exchange, providing a favorable temperature condition for the battery. This is beneficial for ensuring stability of the battery performance, and reducing the risk of thermal runaway. In addition, there is no need to separately provide heat exchange structures such as cooling plates in the housing assembly of the battery, which is beneficial to reducing the number of parts, lowering production costs, and improving the space utilization inside the battery.

In some embodiments, a plurality of the baffles are provided, and the plurality of baffles extend along the second direction and are spaced apart in parallel along a third direction, where the first direction, the second direction, and the third direction are perpendicular to each other.

Accordingly, the flow path of the fluid medium can be made longer, so that the fluid medium can flow over the surface of the battery cell as much as possible in the accommodating cavity, and better heat dissipation effect is achieved. Moreover, the plurality of baffles arranged in parallel can make the sizes of the spaced regions separated by the baffles more uniform, thereby uniformly dissipating heat from the battery cell by the fluid medium flowing through these uniform spaced regions.

In some embodiments, the fluid bladder includes a top wall, a bottom wall, and a plurality of side walls connecting the top wall and the bottom wall, the top wall, the bottom wall, and the plurality of side walls defining the accommodating cavity; the inlet and the outlet are provided on the bottom wall; and one end of each baffle is connected to an inner wall surface of the top wall or the bottom wall, and the other end is arranged in a suspended manner.

Accordingly, the suspended end of the baffle can communicate the plurality of spaced regions separated by the baffle. In this way, the flow path of the fluid medium can be lengthened without affecting the flow of the fluid medium, thereby better dissipating heat from the battery cell.

In some embodiments, along the third direction, extension directions of adjacent baffles along the first direction are opposite to each other.

Accordingly, a tortuous fluid medium flow channel can be formed with a simple structure, so that the fluid medium can more fully and uniformly dissipate heat from the battery cell.

In some embodiments, along the third direction, the baffle closest to the inlet extends along the second direction from an inner wall surface of the bottom wall toward an inner wall surface of the top wall; and/or along the third direction, the baffle closest to the outlet extends along the second direction from the inner wall surface of the bottom wall toward the inner wall surface of the top wall.

Accordingly, when flowing into the accommodating cavity of the fluid bladder through the inlet, the fluid medium cannot directly flow to the outlet along the third direction, but needs to bypass the baffle and flow through the spaced region defined by the baffle before flowing to the outlet, thereby lengthening the flow path of the fluid medium, so that the fluid medium can dissipate heat from the battery cell more sufficiently and uniformly.

In some embodiments, the baffle is in sealing contact with inner wall surfaces of two of the side walls that are oppositely arranged along the third direction.

Accordingly, the fluid medium cannot pass through the baffle during flowing, but can only flow according to the defined tortuous fluid medium flow channel, thereby better dissipating heat from the battery cell.

In some embodiments, the fluid bladder is made of an elastic material.

The elastic material has good elasticity, such that the fluid bladder can expand or contract effectively through the flow of the fluid medium. When subjected to the swelling force released by the battery cell, the fluid bladder can be compressed and produce elastic deformation along a direction of action of the swelling force of the battery cell, and can rebound after the swelling force of the battery cell decreases, thereby adapting to different swelling forms of the battery cell. This enables the fluid bladder to continuously apply an appropriate force to the surface of the battery cell along the first direction, providing an appropriate swelling space for the battery cell while reducing the swelling of the battery cell, so that the stress on the surface of the battery cell along the first direction becomes more uniform, reducing the possibility of stress concentration in the battery cell and effectively improving the performance of the battery.

In some embodiments, the elastic material includes elastic rubber.

Elastic rubber has good elasticity and is easy to mold, which can effectively reduce processing costs. In addition, elastic rubber has good wear resistance and anti-aging properties, which can improve the service performance of the fluid bladder.

In some embodiments, in each of the pressure control units, within a same projected area perpendicular to the first direction, a projected area of the fluid bladder is greater than a projected area of the electrode assembly in the battery cell.

Accordingly, the fluid bladder can more effectively retrain the swelling of the battery cell, reducing the possibility of undesirable situations such as wrinkling of the electrode sheets of the electrode assembly due to free swelling of the battery cell, thereby maintaining the cycle life of the battery and the good performance of the battery.

In some embodiments, along the first direction, the pressure control unit is disposed adjacent to at least one of the surfaces of the battery cell facing the first direction.

Accordingly, the pressure control unit can apply a restraining force to the surface of the battery cell facing the first direction at least when the battery cell swells, thereby controlling the swelling degree of the battery cell.

In some embodiments, a plurality of battery cells are provided, and the plurality of battery cells are arranged along the first direction. The pressure control unit is disposed between adjacent battery cells, and/or between the battery cell and an inner wall of the housing assembly adjacent to the battery cell.

Accordingly, one pressure control unit may simultaneously apply forces to adjacent battery cells, and may also apply an appropriate force to the surface of the battery cell adjacent to the housing assembly facing the first direction, thereby helping to provide an appropriate swelling restraining force for the battery cell, which is beneficial for improving the performance of the battery. Moreover, allowing adjacent battery cells to share one pressure control unit helps reduce the number of parts. Since the pressure control unit can be disposed between the inner wall of the housing assembly and the battery cell adjacent to the inner wall, a swelling restraining force can also be applied to the surface of the battery cell adjacent to the inner wall. Therefore, swelling restraint and pressure control can be applied to the large surfaces of each battery cell accommodated in the housing assembly.

In some embodiments, the pressure control unit is disposed between every two adjacent battery cells; and/or at least two of the battery cells form a battery cell group, and the pressure control unit is disposed between two of the battery cell groups; and/or the pressure control unit is disposed between the battery cell group and the battery cell adjacent to the battery cell group.

Accordingly, the pressure control unit can be arranged at different positions within the housing assembly according to different situations of the battery cells, so that forces can be simultaneously applied to a plurality of battery cells, thereby simultaneously controlling swelling degree of the plurality of battery cells.

In some embodiments, the battery cell includes a pouch battery cell or a prismatic battery cell.

Pouch battery cells are more prone to swelling during the charge-discharge process. Therefore, by providing the pressure control unit, the swelling of the pouch battery cell can be effectively reduced, thereby reducing the occurrence of undesirable phenomena such as lithium plating caused by excessive swelling of the pouch battery cell and improving the charge-discharge cycle life of the battery and the performance of the battery. Prismatic battery cells may also swell during the charge-discharge process, and the pressure control unit can similarly apply a force to the prismatic battery cell to control the swelling degree of the prismatic battery cell.

A second aspect of the present disclosure provides a pressure control unit, the pressure control unit being configured for a battery. The battery includes at least one battery cell, the battery cell includes electrode assemblies stacked along a first direction, and the battery cell includes surfaces facing each other along the first direction. The pressure control unit includes a fluid bladder, an accommodating cavity is formed inside the fluid bladder, the accommodating cavity accommodates a fluid medium, and the fluid bladder can contract or expand through flow of the fluid medium to apply a force to the battery cell through fluid pressure generated by the fluid medium; where the pressure control unit is configured to apply a force to the battery cell, at least when the battery cell swells, to control stress on a surface of the swollen battery cell.

The pressure control unit can apply a force to the battery cell to control stress on the surface of the battery cell within an appropriate range, thereby reducing the swelling of the battery cell. Moreover, the pressure control unit configured as the fluid bladder can adjust the degree of contraction or expansion according to the swelling degree of the battery cell, providing an appropriate swelling space for the battery cell, so that the swelling force of the battery cell can be uniformly released, reducing polarization accumulation of the battery cell, which is beneficial for improving the performance of the battery and the charge-discharge cycle life.

In some embodiments, a maximum pressure that the pressure control unit can apply is within a range from 200 N to 4000 N.

Accordingly, the pressure control unit can apply a large swelling restraining force to the battery cell and control the swelling restraining force to be within an appropriate range, thereby effectively resisting the swelling force of the battery cell. Even when the swelling force of the battery cell is relatively large, the average stress on the surface of the battery cell can still be maintained within an appropriate range. Moreover, since the maximum pressure that the pressure control unit can apply is relatively large, it is less likely that elastic failure occurs such that the pressure control unit cannot rebound and thus cannot continue to provide an appropriate swelling restraining force to the battery cell.

In some embodiments, the fluid bladder includes an inlet and an outlet. The inlet and the outlet are in communication with the accommodating cavity, the inlet is configured for the fluid medium to flow into the accommodating cavity from outside, and the outlet is configured for the fluid medium to flow out of the accommodating cavity. The fluid bladder is configured to expand or contract through inflow or outflow of the fluid medium.

Accordingly, it is possible to flow the fluid medium into or out of the accommodating cavity according to the swelling degree of the battery cell, and adjust the force applied to the surface of the battery cell through different pressures generated by different amounts of fluid medium, so that while the swelling of the battery cell is limited, an appropriate swelling space can be provided for the battery cell, making the stress on the surface of the battery cell uniform.

In addition, circulation of the fluid medium inside the accommodating cavity can be achieved through the inlet and the outlet, thereby carrying away the heat from the battery cell to achieve heat exchange while reducing the swelling of the battery cell. In this way, pressure management and temperature management are integrated, without the need to provide an additional heat exchange structures, effectively saving space and reducing weight.

In some embodiments, the fluid bladder further includes at least one baffle. The baffle is located in the accommodating cavity and is configured to divide the accommodating cavity into at least two spaced regions, and the spaced regions are in communication with each other and form a tortuous fluid medium flow channel.

Accordingly, the flow path of the fluid medium in the accommodating cavity is lengthened, so that the fluid medium can flow through more parts in the accommodating cavity via the tortuous fluid medium flow channel, thereby increasing the heat dissipation area on the surface of the battery cell and further improving the heat dissipation efficiency.

A third aspect of the present disclosure provides a battery pack. The battery pack includes an enclosure and at least one battery according to the first aspect of the present disclosure, the battery being accommodated in the enclosure.

In the battery pack provided in the embodiments of the present disclosure, since the battery cells provided with pressure control units are adopted, an average stress on the large surfaces of the battery cells is maintained within an appropriate range and exhibits good uniformity, and the risk of stress concentration is reduced. Therefore, the risk of reduced charge-discharge cycle life of the battery pack due to swelling of the battery cells is reduced.

A fourth aspect of the present disclosure provides a power consuming device. The power consuming device includes the battery according to the first aspect of the present disclosure or the battery pack according to the third aspect of the present disclosure for supplying electrical energy.

The power consuming device in the embodiments of the present disclosure adopts the battery pack with good performance as described above, thereby reducing the time spent on maintenance and reducing the risk that the power consuming device fails due to failure of the battery pack.

A fifth aspect of the present disclosure provides an energy storage device. The energy storage device includes the battery according to the first aspect of the present disclosure or the battery pack according to the third aspect of the present disclosure for storing electrical energy or supplying electrical energy.

The energy storage device in the embodiments of the present disclosure adopts the battery pack with good performance as described above, thereby reducing the time spent on maintenance and reducing the risk that the energy storage device fails due to failure of the battery pack.

### Beneficial effects of the invention

According to the present disclosure, by controlling stress on a surface of a swollen battery cell, an appropriate swelling space is provided for the battery cell while the swelling of the battery cell is reduced, so that the swelling force of the battery cell can be uniformly released, reducing the polarization accumulation of the battery cell, which is beneficial for improving the performance and charge-discharge cycle life of the battery.

### BRIEF DESCRIPTION OF DRAWINGS

Various other advantages and benefits will become apparent to those of ordinary skill in the art upon reading the following detailed descriptions of exemplary implementations. The accompanying drawings are merely intended to illustrate the purposes of the preferred embodiments, and should not be construed as a limitation on the present disclosure. Moreover, the same reference numerals are used to denote the same components throughout the accompanying drawings. In the drawings:
FIG. 1 is a schematic structural diagram of a vehicle according to some embodiments of the present disclosure;
FIG. 2 is a schematic exploded perspective view of a battery pack according to some embodiments of the present disclosure;
FIG. 3 is a schematic partial exploded perspective view of a battery according to some embodiments of the present disclosure;
FIG. 4 is a schematic partial exploded perspective view of another battery according to some embodiments of the present disclosure;
FIG. 5 is a perspective structural schematic diagram of a pressure control unit according to some embodiments of the present disclosure;
FIG. 6 is a cross-sectional view of a pressure control unit according to some embodiments of the present disclosure, where the dashed line indicates the flow path of the fluid medium;
FIG. 7 is another cross-sectional view of a pressure control unit according to some embodiments of the present disclosure; and
FIG. 8 is a perspective structural schematic diagram of a housing assembly and a top cover assembly of a battery according to some embodiments of the present disclosure.

### Description of reference signs

1. fluid bladder; 11. accommodating cavity; 111. spaced region; 12. top wall; 13. bottom wall; 14. side wall; 2. tab; 3. inlet; 4. outlet; 5. baffle; 10. battery cell; 20. pressure control unit; 30. housing assembly; 40. top cover assembly; 100. battery; 200. controller; 300. motor; 400. battery pack; 401. enclosure; 401a. cover; 401b. bottom plate; 1000. vehicle; X. first direction; Y. second direction; and Z. third direction.

### DESCRIPTION OF EMBODIMENTS

The embodiments of the technical solutions of the present disclosure will be described in detail below with reference to the accompanying drawings. The following embodiments are only used to illustrate the technical solutions of the present disclosure more clearly, and thus are only used as examples and cannot be used to limit the protection scope of the present disclosure.

Unless otherwise defined, all technical and scientific terms used herein have the same meaning as commonly understood by those skilled in the technical field to which the present disclosure belongs; the terms used herein are only for the purpose of describing specific embodiments and are not intended to limit the present disclosure; the terms "include" and "comprise" and any variations thereof in the present disclosure are intended to cover non-exclusive inclusions.

In the description of the embodiments of the present disclosure, the technical terms "first", "second", "third", "fourth", "fifth", and the like are only used to distinguish different objects and should not be understood as indicating or implying relative importance or implicitly indicating the number, specific order, or primary-secondary relationship of the indicated technical features. In the description of the embodiments of the present disclosure, "a plurality of" means at least two unless otherwise specifically stated.

In this specification, reference to "embodiment" means that specific features, structures or characteristics described with reference to the embodiment may be incorporated in at least one embodiment of the present disclosure. The word "embodiment" appearing in various positions in the specification does not necessarily refer to the same embodiment or an independent or alternative embodiment that is exclusive of other embodiments. Those skilled in the art should explicitly and implicitly understand that the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: A exists alone, A and B exist simultaneously, and B exists alone. In addition, the character "/" herein generally indicates that the associated objects before and after are in an "or" relationship.

In the description of the embodiments of the present disclosure, the orientations or positional relationships indicated by the technical terms "length", "width", "thickness", "upper", "lower", "front", "rear", "left", "right", "vertical", "horizontal", "top", "bottom", "inside", "outside", and the like are based on the orientations or positional relationships shown in the accompanying drawings. These terms are merely for convenience and brevity of description of the embodiments of the present disclosure rather than indicating or implying that the means or components mentioned must have specific orientations or must be constructed, operated, or used according to specific orientations, and therefore shall not be construed as any limitations on embodiments of the present disclosure.

In the description of the embodiments of the present disclosure, unless otherwise clearly specified and limited, the technical terms such as "mounting", "interconnection", "connection", and "fixation" should be understood in a broad sense. For example, it may refer to a fixed connection, a detachable connection, or an integral connection, may refer to a mechanical connection or electrical connection, and may refer to a direct connection, an indirect connection via an intermediate medium, or an interaction between two elements. Those of ordinary skill in the art can understand specific meanings of these terms in the embodiments of the present disclosure as appropriate to specific situations.

In the description of the embodiments of the present disclosure, unless otherwise clearly specified and defined, the technical term "contact" should be understood in a broad sense. It may be direct contact or contact through an intermediate medium layer, it may be contact between two entities with substantially no interaction force, or it may be contact between two entities with an interaction force.

Below, the present disclosure is described in detail.

At present, new energy batteries are increasingly widely used in daily life and industry. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace. With the continuous expansion of the application fields of power batteries, their market demand is also continuously increasing.

During the charge-discharge cycles of battery cells in a battery, chemical reactions occur in internal components of the battery cell, such as the electrode assemblies and the electrolyte solution, which may lead to phenomena such as swelling of the negative electrode or gas generation, causing swelling of the battery cells.

Especially for lithium metal batteries using lithium metal as the negative electrode, volume expansion of the negative electrode occurs during cycling, which causes the thickness of the electrode to continuously increase, thereby resulting in battery bulging or even battery failure. Particularly for pouch batteries using flexible materials as battery housings, rigid structural members cannot be used to restrain swelling, and the consequences of such volume expansion are more pronounced in pouch battery cells.

Prismatic batteries may also experience outward bulging and swelling of battery cells.

In the related art, in order to avoid further adverse effects caused by structural interference between adjacent battery cells due to outward bulging and swelling, a certain gap is reserved between adjacent battery cells during battery assembly to provide swelling space for the battery cells. However, after such gaps are reserved between adjacent battery cells, the battery cells may undergo free swelling due to lack of external restraint, which may cause wrinkling of the electrode sheets in the electrode assembly and further lead to undesirable situations such as lithium plating, causing deterioration of the cycle performance of the battery and significantly shortening the service life of the battery.

In the related art, there is also such a solution: a buffer pad is sandwiched between adjacent battery cells. The buffer pad is made of foam or the like with a certain compressibility, and the buffer pad provides a certain swelling buffering effect for the battery cells. When the battery cell swells, it compresses the buffer pad to cause deformation thereof, and the buffer pad limits the swelling of the battery cell through a rebound force generated by its own elastic deformation. However, due to the limited deformation capability of the buffer pad, when the swelling force of the battery cell is excessively large, the buffer pad can hardly continue to deform, and repeated compression may cause permanent compressive deformation of the buffer pad, so that it can no longer provide a restraining effect on the swelling of the battery cell. That is, buffer pads such as foam of appropriate thickness cannot provide a sufficiently large restraining force relative to the swelling force of the battery cell, and thus effective pressure management cannot be performed for the battery cell.

Especially for batteries applied in fields such as aerospace, due to their unique application environments, requirements for battery performance that are adapted to the application scenarios are proposed. Taking an aircraft as an example, during takeoff or landing, the aircraft may draw a high discharge current from the battery, under which condition a large amount of heat may be released by the battery and the swelling degree of the battery may become more severe. In addition, when the aircraft flies at high altitude, reduction in air pressure and air density may further aggravate the swelling of the battery. Therefore, a larger swelling restraining force needs to be applied to the battery cells.

Therefore, it is desirable to apply an appropriate swelling restraining force to a swollen battery cell, so that the surface of the swollen battery cell has appropriate and relatively uniform stress while an appropriate swelling space is provided for the battery cells. That is, it is desirable to provide a battery capable of controlling stress on the surface of a swollen battery cell, a pressure control unit applied to such a battery, and a power consuming device and energy storage device including such a battery.

In view of the problems existing in the above related art, the present disclosure provides a battery. The battery includes a housing assembly, at least one battery cell, and at least one pressure control unit. The battery cell is accommodated in the housing assembly, and the battery cell includes electrode assemblies stacked along a first direction. The pressure control unit includes a fluid bladder, an accommodating cavity is formed inside the fluid bladder, and the fluid bladder can contract or expand through flow of the fluid medium to apply a force to the battery cell through fluid pressure generated by the fluid medium, where the pressure control unit applies the force to the battery cell, at least when the battery cell swells, to control stress on a surface of the swollen battery cell.

Since the battery includes the pressure control unit, when the battery cell swells, the battery cell applies a force to the pressure control unit, and the pressure control unit applies a reaction force to the battery cell after being compressed, thereby reducing the swelling degree of the battery cell and reducing the risks caused by swelling, which is beneficial for improving the cycle life of the battery.

In addition, since the pressure control unit includes the fluid bladder, an accommodating cavity is formed inside the fluid bladder, the accommodating cavity accommodates a fluid medium, and the fluid bladder can contract or expand through flow of the fluid medium. Therefore, the fluid bladder can adjust the pressure generated by the fluid in the accommodating cavity on the bladder wall of the fluid bladder according to the swelling degree of the battery cell, to apply an appropriate force (swelling restraining force) to the battery cell and provide an appropriate swelling space for the battery cell, thereby controlling the stress on the surface of the swollen battery cell. In this way, the swelling force of the battery cell can be uniformly released, reducing the possibility of the battery cell undergoing free swelling, further making the force on the surface of the battery cell along the stacking direction of the electrode assemblies more uniform, and reducing polarization accumulation of the battery cell, which is beneficial for improving the performance of the battery.

The battery provided in the embodiments of the present disclosure may be used in, but is not limited to, power consuming devices such as energy storage power systems, vehicles, ships, or aircraft, and energy storage devices such as energy storage containers and energy storage cabinets.

The battery provided in the embodiments of the present disclosure may also be grouped to be used as a battery pack. The battery pack may also be used in, but is not limited to, power consuming devices such as energy storage power systems, vehicles, ships, or aircraft, and energy storage devices such as energy storage containers and energy storage cabinets.

The embodiments of the present disclosure provide a power consuming device including the above battery or battery pack configured to supply electrical energy. The power consuming device includes, but is not limited to, a mobile phone, a tablet computer, a laptop computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In the following embodiments, for the convenience of description, a vehicle 1000 is used as an example to illustrate a power consuming device according to an embodiment of the present disclosure. The following description is made with reference to the accompanying drawings.

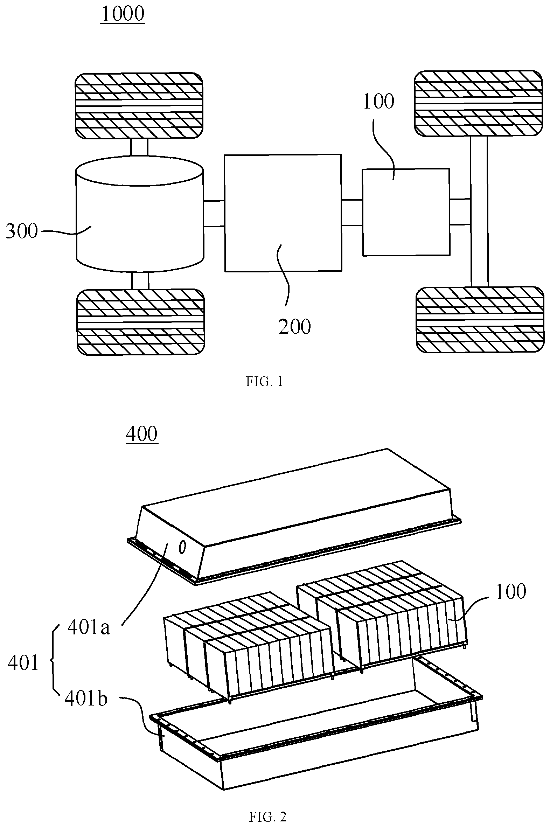

FIG. 1 is a schematic structural diagram of a vehicle 1000 according to some embodiments of the present disclosure. The vehicle 1000 may be a fuel vehicle, a gas vehicle, or a new energy vehicle, and the new energy vehicle can be a pure electric vehicle, a hybrid vehicle, or an extended-range vehicle, or the like. As shown in FIG. 1, a battery 100 is provided inside the vehicle 1000, and the battery 100 may be disposed at the bottom, in the front, or at the rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present disclosure, the battery 100 can not only serve as an operating power source of the vehicle 1000, but also as a driving power source of the vehicle 1000, replacing or partially replacing fuel or natural gas to provide driving power for the vehicle 1000.

FIG. 2 is a schematic exploded perspective view of a battery pack 400 according to embodiments of the present disclosure. As shown in FIG. 2, the battery pack 400 includes an enclosure 401 and at least one battery 100. The enclosure 401 includes a cover 401a and a bottom plate 401b. The cover 401a is disposed over the bottom plate 401b, thereby forming an accommodation space for the battery 100 between the bottom plate 401b and the cover 401a.

In the battery pack 400, a plurality of batteries 100 may be provided. The plurality of batteries 100 may be connected in series, parallel, or series-parallel, where being connected in series-parallel means a combination of series and parallel connections of the plurality of batteries 100. The plurality of batteries 100 may be directly connected in series, parallel, or series-parallel, and then an entirety formed by the plurality of batteries 100 is placed in the accommodation space formed by the bottom plate 401b and the cover 401a. Alternatively, the battery 100 may be formed by a plurality of battery cells 10 being connected in series, parallel, or series-parallel first to form a battery module, and then a plurality of battery modules are connected in series, parallel, or series-parallel to form an entirety and are accommodated in the accommodation space formed by the bottom plate 401b and the cover 401a. The battery pack 400 may also include other structures. For example, the battery pack 400 may also include a current collecting component configured to implement electrical connection between the plurality of batteries 100.

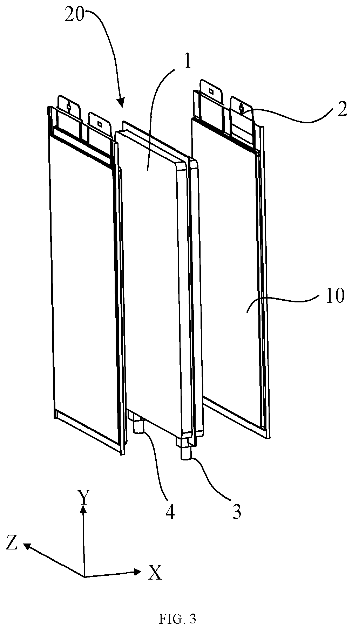

Below, some embodiments of the present disclosure are described in detail with reference to FIG. 3 to FIG. 7.

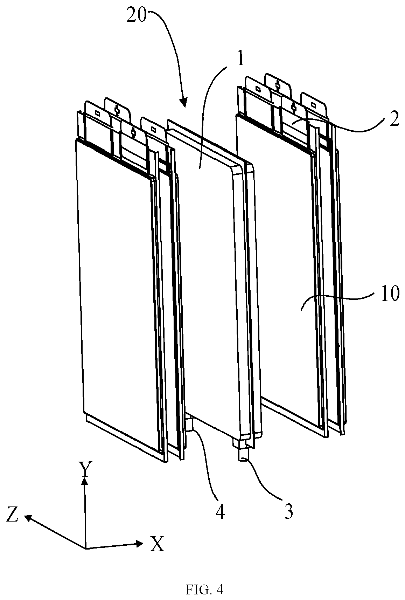

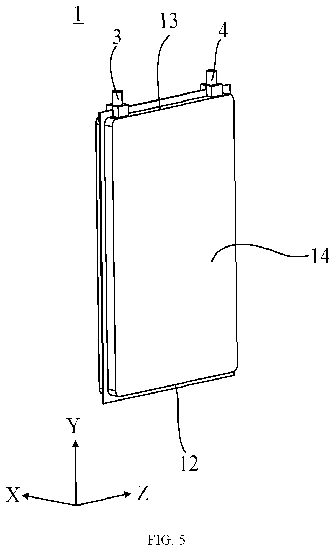

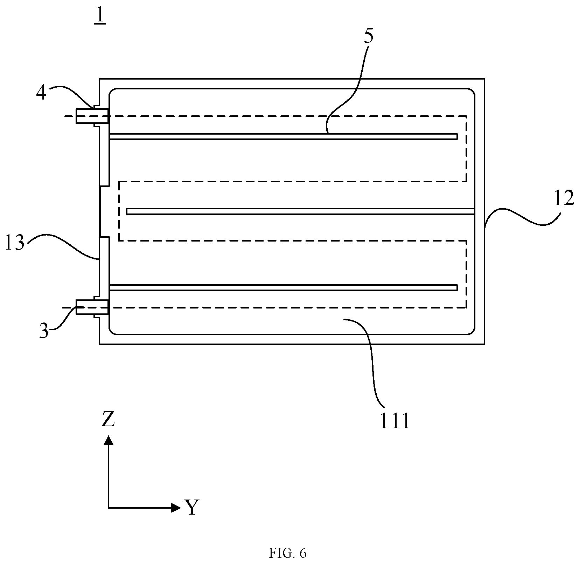

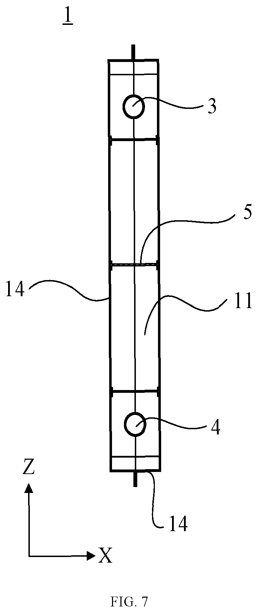

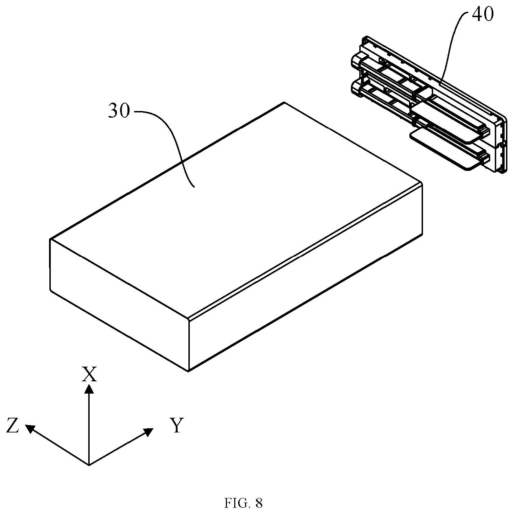

FIG. 3 is a partial exploded perspective view of a battery according to some embodiments of the present disclosure. FIG. 4 is a partial exploded perspective view of another battery according to some embodiments of the present disclosure. FIG. 5 is a perspective structural schematic diagram of a pressure control unit according to some embodiments of the present disclosure. FIG. 6 is a cross-sectional view of a pressure control unit according to some embodiments of the present disclosure, where the dashed line indicates the flow path of the fluid medium. FIG. 7 is another cross-sectional view of a pressure control unit according to some embodiments of the present disclosure. FIG. 8 is a perspective structural schematic diagram of a housing assembly and a top cover assembly of a battery according to some embodiments of the present disclosure.

In some embodiments of the present disclosure, for convenience of explanation, a first direction, a second direction, and a third direction are set. The first direction, the second direction, and the third direction are directions perpendicular to each other, but those skilled in the art should understand that the embodiments of the present disclosure are not limited to the situation where the three directions are perpendicular to each other. For convenience of explanation, as shown by the arrows in FIG. 3 to FIG. 8, the direction where arrow X is located is the first direction, the direction where arrow Y is located is the second direction, and the direction where arrow Z is located is the third direction.

As shown in FIG. 3, FIG. 4, and FIG. 8, a first aspect of the present disclosure provides a battery 100. The battery 100 includes a housing assembly 30, at least one battery cell 10, and at least one pressure control unit 20. The battery cell 10 is accommodated in the housing assembly 30, and the battery cell 10 includes electrode assemblies stacked along the first direction. The pressure control unit 20 includes a fluid bladder 1, an accommodating cavity 11 is formed inside the fluid bladder 1, the accommodating cavity 11 accommodates a fluid medium, and the fluid bladder 1 can contract or expand through flow of the fluid medium to apply a force to the battery cell through fluid pressure generated by the fluid medium, where the pressure control unit 20 applies the force to the battery cell 10, at least when the battery cell 10 swells, to control stress on a surface of the swollen battery cell 10.

The housing assembly 30 is an external protective housing of the battery 100.

By way of example, the housing assembly 30 may be formed by bending and welding metal plates, for example, thereby having good pressure-bearing capacity and better protecting the battery cells 10 accommodated therein.

By way of another example, the housing assembly 30 may be integrally formed by injection molding of plastic material. Under the condition of meeting basic strength requirements, the plastic material itself is lighter in weight and has good insulation performance, so that no additional insulating layer is required.

The battery 100 further includes a top cover assembly 40. The top cover assembly 40 is located on one side of the housing assembly 30 along the second direction and covers the housing assembly 30 to separate the internal environment of the battery 100 from the external environment, thereby further protecting the battery cells 10 accommodated in the housing assembly 30 and reducing the possibility of the battery cells 10 in the housing assembly 30 detaching from the housing assembly 30.

The battery cell 10 refers to a basic unit that can convert chemical energy and electrical energy into each other, and may be used to form a battery or a battery pack so as to supply power to a power consuming device.

The battery cell 10 may be a secondary battery cell. A secondary battery cell refers to a battery cell that can be recharged to activate active materials for continuous use after the battery cell 10 is discharged.

The battery cell 10 may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead-acid battery cell, and the like. The embodiments of the present disclosure are not limited thereto.

Although not shown, the battery cell 10 includes electrode assemblies. The electrode assemblies are stacked along the first direction (also referred to as the thickness direction of the battery). The electrode assemblies are components in the battery cell 10 in which electrochemical reactions occur.

The electrode assembly includes a positive electrode sheet, a negative electrode sheet, and a separator. During the charge-discharge process of the battery cell 10, active ions (such as lithium ions) intercalated and deintercalated back and forth between the positive electrode sheet and the negative electrode sheet. The separator is sandwiched between the positive electrode sheet and the negative electrode sheet to prevent short circuit between the positive electrode sheet and the negative electrode sheet, and at the same time allow active ions to pass through.

In some embodiments, the positive electrode may be a positive electrode sheet, and the positive electrode sheet may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil current collector or a composite current collector. For example, aluminum or stainless steel with silver surface treatment, stainless steel, copper, aluminum, nickel, or titanium can be used as the metal foil. The composite current collector may include a polymer material base layer and a metal layer. The composite current collector may be formed by forming a metal material (aluminum, aluminum alloy, nickel, nickel alloy, titanium, titanium alloy, silver, and silver alloy, or the like) on a polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, or respective modified compounds thereof. However, the present disclosure is not limited to these materials, and other conventional materials that can be used as battery positive electrode active materials may alternatively be used. These positive electrode active materials may be used alone or in combination of two or more. Examples of the lithium-containing phosphate may include, but are not limited to, at least one of lithium iron phosphate (for example, LiFePO4 (LFP for short)), composite materials of lithium iron phosphate and carbon, lithium manganese phosphate (for example, LiMnPO4), composite materials of lithium manganese phosphate and carbon, lithium manganese iron phosphate, or composite materials of lithium manganese iron phosphate and carbon.

In some embodiments, the positive electrode may use foam metal. The foam metal may be foam nickel, foam copper, foam aluminum, foam alloy, or the like. When foam metal is used as the positive electrode, the surface of the foam metal may be not provided with a positive electrode active material, or alternatively, a positive electrode active material may be provided. In an example, the metal foam may alternatively be filled with and/or have deposited therein a lithium source material, potassium metal, or sodium metal, where the lithium source material is a lithium metal and/or a lithium-rich material.

In some embodiments, the negative electrode may be a negative electrode sheet, and the negative electrode sheet may include a negative electrode current collector.

In an example, the negative electrode current collector may be a metal foil, foam metal, or composite current collector. For example, as the metal foil, the negative electrode current collector may use silver surface-treated aluminum or silver surface-treated stainless steel, stainless steel, copper, aluminum, nickel, or titanium. The composite current collector may include a polymer material base layer and a metal layer. The metal foam may be nickel foam, copper foam, aluminum foam, alloy foam, or the like. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene). In some embodiments, the positive electrode current collector may be made of aluminum, and the negative electrode current collector may be made of copper.

In some embodiments, the electrode assembly further includes a separator. The separator is disposed between the positive electrode and the negative electrode.

In some embodiments, the separator is a separator film. The separator film is not particularly limited in type in the present disclosure, and any well-known porous separator film with good chemical stability and mechanical stability may be selected.

In an example, the main material of the separator film may be selected from at least one of glass fiber, non-woven fabric, polyethylene, polypropylene, polyvinylidene fluoride, and ceramics.

In some embodiments, the separator is a solid electrolyte. The solid electrolyte is provided between the positive electrode and the negative electrode, and plays the role of transmitting ions and separating the positive electrode from the negative electrode.

In some embodiments, the electrode assembly is of a wound structure. The positive electrode sheet and the negative electrode sheet are wound into a wound structure.

In some embodiments, the electrode assembly is of a laminated structure.

In an example, a plurality of positive electrode sheets and a plurality of negative electrode sheets may be provided respectively, and the plurality of positive electrode sheets and the plurality of negative electrode sheets are alternately stacked.

In an example, a plurality of positive electrode sheets may be provided, and a negative electrode sheet is folded to form a plurality of stacked folding sections, with one positive electrode sheet sandwiched between adjacent folding sections.

In an example, both the positive electrode sheet and the negative electrode sheet are folded to form a plurality of stacked folding sections.

In an example, a plurality of separators may be provided and respectively disposed between any adjacent positive electrode sheets or negative electrode sheets.

In an example, the separator may be continuously provided and arranged between any adjacent positive electrode sheets or negative electrode sheets by folding or winding.

In some embodiments, the electrode assembly may have a cylindrical shape, a flat shape, a polygonal prism shape, or the like.

In some embodiments, the battery cell 10 further includes an electrolyte, and the electrolyte plays the role of conducting ions between the positive electrode and the negative electrode. The present disclosure has no specific limitation on the type of electrolyte, and the electrolyte may be selected as required. The electrolyte may be in a liquid state, a gel state, or a solid state.

In some embodiments, the electrode assembly is provided with tabs 2, and the tabs 2 can conduct current from the electrode assembly. The tabs 2 include a positive electrode tab and a negative electrode tab.

In some embodiments, the battery cell 10 may include a casing. The casing is used for packaging components such as the electrode assembly and the electrolyte. The housing may be a steel casing, an aluminum casing, a plastic casing (such as polypropylene), a composite metal casing (such as copper-aluminum composite casing), an aluminum-plastic film, or the like.

In an example, the battery cell 10 may be a cylindrical battery cell, a prismatic battery cell, a pouch battery cell, or a battery cell of another shape. The prismatic battery cell includes a rectangular battery cell, a blade-type battery cell, a multi-prismatic battery. The multi-prismatic battery is, for example, a hexagonal prismatic battery, which is not particularly limited in the present disclosure.

In the embodiments of the present disclosure, the battery 100 may alternatively be a single physical module including one or more battery cells 10 to provide a higher voltage and capacity. When a plurality of battery cells 10 are provided, the plurality of battery cells 10 may be connected in series, parallel, or series-parallel.

The battery 100 in the embodiments of the present disclosure further includes a pressure control unit 20. The pressure control unit 20 is disposed at least adjacent to one battery cell 10 and is configured to apply a force (swelling restraining force) to the battery cell 10 to control the swelling degree of the battery cell 10, thereby maintaining the stress on the surface of the battery cell 10 within an appropriate range while reducing the swelling of the battery cell 10. Since the battery cell 10 usually has the maximum degree of swelling along its thickness direction (first direction), the pressure control unit 20 is usually disposed adjacent to a surface of the battery cell 10 facing the first direction.

The stress on the surface of the battery cell refers to the ratio of a force applied to the surface of the battery cell to an area of the surface, and is typically expressed in Pascals (Pa). The magnitude of the stress depends on the magnitude of the force applied to the surface of the battery cell and the surface area of the battery cell.

The pressure control unit 20 can control the stress on the surface of the battery cell 10 within an appropriate range by applying different forces to the surface of the battery cell 10 and control the uniformity of the stress on the surface of the battery cell 10, thereby reducing the possibility of undesirable situations such as excessive compression and stress concentration of the battery cell 10, and improving the performance of the battery and the charge-discharge cycle life.

As shown in FIG. 6 and FIG. 7, the pressure control unit 20 includes a fluid bladder 1. The fluid bladder 1 has a substantially rectangular flat shape. Through the flat, rectangular shape of the fluid bladder 1, surface contact between the fluid bladder 1 and the surface of the battery cell 10 facing the first direction can be achieved, so that the fluid bladder 1 can uniformly apply a force to the battery cell 10, reducing the possibility of stress concentration.

By way of example, within the same projection plane perpendicular to the first direction, the projected area of the fluid bladder 1 is at least greater than 50% of the projected area of the electrode assembly in the battery cell 10, preferably the same as or greater than the projected area of the electrode assembly in the battery cell 10. In this way, the swelling degree of the battery cell 10 can be fully and better controlled.

The compressibility of air and the fluidity of water are used to achieve elastic effects.

The fluid bladder 1 is an elastic bladder with an accommodating cavity 11 inside. The accommodating cavity 11 contains fluid medium such as gas or liquid, and achieves elastic action by taking advantage of the compressibility of gas or the fluidity of liquid. That is, the fluid bladder 1 can change the amount of fluid medium flowing into the accommodating cavity 11 by controlling the flow of the fluid medium to control the contraction or expansion of the fluid bladder 1, thereby applying different forces to the battery cell 10 through different fluid pressures.

However, those skilled in the art should understand that in some other embodiments, the fluid bladder 1 can also have any other suitable shape.

Specifically, during assembly of the battery 100, the housing assembly 30 may contain only one battery cell 10 or may contain a plurality of battery cells 10. One pressure control unit 20 may have one or more battery cells 10 arranged on only one side thereof along the first direction, or may have one or more battery cells 10 arranged on both sides thereof. The pressure control unit 20 applies a force to the battery cell 10 at least when the battery cell 10 swells.

By way of example, in an initial state, the fluid medium may be injected into the accommodating cavity 11, and the outer sidewall of the fluid bladder 1 contacts the surface of the battery cell 10 facing the first direction without applying a force to the surface. When the battery cell 10 swells, it applies a force to the fluid bladder 1, and the fluid bladder 1 undergoes elastic deformation after being compressed, thereby applying a reaction force to the battery cell 10 and reducing the swelling degree of the battery cell 10.

By way of another example, in the initial state, the fluid medium may be injected into the accommodating cavity 11, and the outer sidewall of the fluid bladder 1 abuts against the surface of the battery cell 10 facing the first direction and pre-apply a certain preload to the surface. When the battery cell 10 swells, it needs to overcome the preload applied by the fluid bladder 1 before swelling, thereby reducing the swelling degree of the battery cell 10.

In either case, the fluid bladder 1 can effectively reduce the free swelling of the battery cell 10, which is beneficial for improving the cycle life of the battery 100.

In addition, the fluid bladder 1 can adjust the degree of contraction or expansion according to the swelling degree of the battery cell 10, to provide an appropriate swelling space for the battery cell 10. In this way, the swelling force of the battery cell 10 can be uniformly released, reducing the possibility of the battery cell 10 undergoing free swelling, thereby making the force on the surface of the battery cell 10 facing the stacking direction of the electrode assemblies more uniform, and reducing the polarization accumulation of the battery cell 10, which is beneficial for improving the performance of the battery 100.

Moreover, since the fluid bladder 1 expands or contracts through the flow of the fluid medium, the pressure on the bladder wall of the fluid bladder 1 can be changed through transformation of fluid pressure, thereby applying a swelling restraining force to the battery cell 10. Therefore, the degree of expansion of the fluid bladder 1 can be changed by changing the inflow amount of the fluid medium. Even with repeated expansion or contraction, the deformation capacity of the fluid bladder 1 is not prone to change, thereby providing a reliable and stable force for the battery cell 10.

By way of example, the fluid medium may be gas, for example, and the gas includes, but is not limited to, inert gas.

By way of another example, the fluid medium may be liquid, and the liquid includes, but is not limited to water and silicone oil.

When the fluid medium is liquid, the fluid bladder 1 can not only reduce the swelling of the battery cell 10, but also provide a certain heat exchange effect for the battery cell 10, thereby accelerating the heat dissipation rate of the battery 100.

By way of example, the casing of the fluid bladder 1 may be provided with a weak portion, for example, and the weak portion will rupture when a preset temperature is reached. In this way, in the case of thermal runaway of the battery cell 10, the weak portion of the fluid bladder 1 may melt or rupture at high temperature, so that the fluid medium in the fluid bladder 1 flows out and rapidly cools the battery cell 10, reducing the further aggravation of thermal runaway.

In some embodiments, the battery cell 10 includes surfaces facing each other along the first direction, and at least when the battery cell 10 swells, an average stress in the same surface of the same battery cell 10 is within a range from 0.1 MPa to 2 MPa.

Accordingly, the pressure control unit 20 may apply a force ((swelling restraining force) to the battery cell 10, so as to control the average stress on the surfaces of the battery cell 10 facing each other along the first direction within an appropriate range, so that the average stress in the same surface can be maintained within an appropriate range, which is beneficial for improving the cycle life of the battery cell 10 and thereby improving the performance of the battery 100.

Specifically, the average stress on the surface of the battery cell 10 facing the first direction is M, and that the contact area between the fluid bladder 1 and the surface of the battery cell 10 along the first direction is S, then under an equilibrium state, the force F applied by the fluid bladder 1 to the surface of the battery cell 10 facing the first direction is F = S * M. Accordingly, the amount of fluid medium flowing into the accommodating cavity 11 can be adjusted through the calculated F, so that the average stress M on the surface of the battery cell 10 facing the first direction can be maintained within an appropriate range between 0.1 MPa and 2 MPa.

By way of example, the average stress on the surface of the battery cell 10 facing the first direction is 0.1 MPa, 0.2 MPa, 0.3 MPa, 0.4 MPa, 0.5 MPa, 0.6 MPa, 0.7 MPa, 0.8 MPa, 0.9 MPa, 1.0 MPa, 1.1 MPa, 1.2 MPa, 1.3 MPa, 1.4 MPa, 1.5 MPa, 1.6 MPa, 1.7 MPa, 1.8 MPa, 1.9 MPa, or 2 MPa.

The battery cell 10 may be tested using an in-situ swelling analyzer to find the most appropriate average stress on the surface of the battery cell 10 facing the first direction, and then the force applied by the fluid bladder 1 to the battery cell 10 is adjusted so that the average stress on the surface of the battery cell 10 facing the first direction is maintained within an optimal range, which is beneficial for improving the cycle life of the battery 100.

In some embodiments, for the same surface of the same battery cell 10, a value of a minimum stress calculated per unit area divided by a maximum stress calculated per unit area at a same moment is greater than 50%.

Accordingly, the force on the entire surface of the battery cell 10 facing the first direction can be made more uniform, and the possibility of stress concentration can be reduced, so that the battery cell 10 has a favorable stress environment during cycling, thereby reducing the possibility of lithium plating in the battery cell 10, improving the performance of the battery 100, and prolonging the service life of the battery 100.

In some embodiments, a maximum pressure that the pressure control unit 20 can apply is within a range from 200 N to 4000 N.

Accordingly, the pressure control unit 20 can apply a relatively large (swelling restraining force to the battery cell 10 and control the (swelling restraining force to be within an appropriate range, thereby effectively resisting the swelling force of the battery cell 10. Even when the swelling force of the battery cell is relatively large, the average stress on the surface (for example, a large surface) of the battery cell can be maintained within an appropriate range.

In addition, since the pressure control unit 20 can apply a relatively large maximum pressure, the pressure control unit 20 is less likely to experience undesirable situations, like a buffer pad, in which, due to elastic failure, it cannot rebound and thus cannot provide an appropriate swelling restraining force to the battery cell 10 again.

In some embodiments, as shown in FIG. 3 to FIG. 7, the fluid bladder 1 includes an inlet 3 and an outlet 4. The inlet 3 and the outlet 4 are in communication with the accommodating cavity 11. The inlet 3 is configured for the fluid medium to flow into the accommodating cavity 11 from outside, and the outlet 4 is configured for the fluid medium to flow out of the accommodating cavity 11. The fluid bladder 1 can expand or contract through inflow or outflow of the fluid medium, respectively.

The inlet 3 and the outlet 4 are connected to an external fluid medium supply device (not shown in the figures). The fluid medium in the fluid medium supply unit can be injected into the accommodating cavity 11 through the inlet 3, thereby expanding the fluid bladder 1, and the fluid medium in the accommodating cavity 11 can also flow out of the accommodating cavity 11 through the outlet 4, thereby contracting the fluid bladder 1. Accordingly, the fluid bladder 1 can adjust the force applied by the fluid bladder 1 to the battery cell 10 by changing the pressure according to the swelling degree of the battery cell 10, to alleviate the change in internal stress after the swelling of the battery cell 10. Accordingly, while the swelling of the battery cell 10 is limited, an appropriate swelling space can be provided for the battery cell 10, reducing the possibility of stress concentration and maintaining the structural stability of the battery 100.

By way of example, valves may be provided at the inlet 3 and the outlet 4 to control the opening or closing of the inlet 3 and the outlet 4.

By way of another example, flow meters may also be provided at the inlet 3 and the outlet 4, so that the fluid pressure can be calculated according to the amount of fluid medium flowing into the accommodating cavity 11, and thus the magnitude of the force applied by the fluid bladder 1 to the surface of the battery cell 10 facing the first direction can be obtained.

In some embodiments, the battery 100 further includes a top cover assembly (not shown in the figures). The top cover assembly is located on one side of the housing assembly along the second direction. The inlet 3 and the outlet 4 are arranged to face to face an opposite side in the second direction from the top cover assembly. The second direction is perpendicular to the first direction.

The top cover assembly refers to a component that covers the opening of the housing assembly to isolate the internal environment of the battery 100 from the external environment. The shape of the top cover assembly may be adapted to the shape of the opening of the housing assembly. Optionally, the top cover assembly may be made of a material with a specific hardness and strength, so that the top cover assembly is less likely to deform when subjected to extrusion and collision, enabling the battery 100 to have higher structural strength and improved safety performance. The top cover assembly may be provided with functional components such as connection members. The connection member may be used for electrical connection with the tab 2 of the battery cell 10 to output or input electrical energy of the battery cell 10.

By way of example, the material of the top cover assembly includes, but is not limited to, copper, iron, aluminum, stainless steel, aluminum alloy, and plastic.

The inlet 3 and the outlet 4 of the fluid bladder 1 need to extend out of the housing assembly to communicate with the external fluid medium supply device, and the top cover assembly usually needs to be sealed with the housing assembly. Therefore, the inlet 3 and the outlet 4 being arranged on an opposite side in the second direction from the top cover assembly facilitates the installation of the top cover assembly. The inlet 3 and the outlet 4 do not affect the sealing between the top cover assembly and the housing assembly, nor do they affect the connection between the tab 2 of the battery cell 10 and the connection member of the top cover assembly. Moreover, the top cover assembly does not need to reserve additional holes for the inlet 3 and the outlet 4 to pass through, thereby reserving sufficient space for arranging the connection member, and further reducing the assembly difficulty and production cost of the top cover assembly.

In addition, the housing assembly usually also includes a flame-retardant cover. The flame-retardant cover is disposed on the housing assembly and is located on an opposite side along the second direction from the top cover assembly. The flame-retardant cover can be ruptured when thermal runaway occurs in the battery cell 10 inside the battery 100, so that the emissions generated by the thermal runaway can be directionally discharged. Therefore, the structural strength of the flame-retardant cover is generally relatively low. Arranging the inlet 3 and the outlet 4 facing the side of the flame-retardant cover and allowing them to extend out of the housing assembly through the flame-retardant cover does not excessively affect the functional effect of the flame-retardant cover.

In some embodiments, as shown in FIG. 6, the fluid bladder 1 further includes at least one baffle 5. The baffle 5 is located in the accommodating cavity 11 and is configured to divide the accommodating cavity 11 into at least two spaced regions 111, and the spaced regions 111 are in communication with each other and form a tortuous fluid medium flow channel.

During the charge-discharge cycles of the battery cell 10, in addition to swelling, heat is also generated. If the heat accumulates and cannot be effectively dissipated, the performance of the battery 100 may also be affected. In severe cases, the chemical reactions inside the battery cell 10 may become uncontrolled, which may lead to serious consequences such as explosion or fire of the battery 100.

In the related art, heat exchange structures such as cooling plates and cooling sheets are usually provided on the bottom surface of the battery cell for passive heat dissipation of the battery cell. However, the provision of such heat exchange structures occupies space inside the housing assembly and thus affects the energy density of the battery. Especially for pouch battery cells, the thickness of pouch battery cells is relatively small, making it difficult to design heat exchange structures on their bottom surfaces. The provision of heat exchange structures between the large surfaces of pouch battery cells causes space waste, which is not conducive to improving space utilization.

However, the fluid bladder 1 in the embodiments of the present disclosure can provide a good heat dissipation effect for the battery cell 10 while reducing the swelling of the battery cell 10. As described above, the fluid bladder 1 can inject the fluid medium into the accommodating cavity 11 through the inlet 3 or allow the fluid medium to flow out of the accommodating cavity 11 through the outlet 4, thereby enabling the fluid bladder 1 to contract or expand. However, those skilled in the art should understand that when the battery cell 10 and the pressure control unit 20 are in an equilibrium state, in addition to closing the inlet 3 and the outlet 4 of the fluid bladder 1 to keep the force applied by the pressure control unit 20 to the battery cell 10 unchanged, both the inlet 3 and the outlet 4 may be opened, and the inflow rate and inflow amount of the fluid medium flowing into the accommodating cavity 11 through the inlet 3 are maintained equal to the outflow rate and outflow amount of the fluid medium flowing out of the accommodating cavity 11 through the outlet 4. In this way, the force applied by the pressure control unit 20 to the battery cell 10 remains unchanged as well. Moreover, since the fluid medium in the accommodating cavity 11 circulates, the fluid medium can carry away the heat generated by the battery cell 10 during flowing, so as to exchange heat, thereby providing a good heat exchange effect for the battery cell 10 while reducing the swelling of the battery cell 10.

In order to further improve the heat dissipation of the battery cell 10, the fluid bladder 1 in the embodiments of the present disclosure further includes a baffle 5. The baffle 5 is substantially in a flat plate shape. In this way, when flowing into the accommodating cavity 11, the fluid medium is blocked by the baffle 5, causing the fluid medium to not directly flow to the outlet 4, but to bypass the baffle 5 and flow through the spaced region 111 defined by the baffle 5 before flowing to the outlet 4, thereby forming a tortuous fluid medium flow channel. This tortuous fluid medium flow channel formed by the plurality of spaced regions 111 may lengthen the flow distance of the fluid medium and enable the fluid medium to flow through as many parts of the accommodating cavity 11 as possible, increasing the heat exchange area, so that the heat can be carried away from the battery cell 10 attached to the fluid bladder 1 as much as possible.

The dashed line in FIG. 6 schematically shows a flow path of the fluid medium in the accommodating cavity 11 provided with the baffle 5.

Accordingly, the fluid bladder 1 can cause the fluid medium in the accommodating cavity 11 to flow along the tortuous fluid medium flow channel. While reducing the swelling of the surface of the battery cell 10 facing the first direction, the fluid bladder 1 can also provide a heat exchange effect for the surface, thereby improving the heat dissipation rate of the battery cell 10 and providing a favorable temperature condition for the battery 100, which is beneficial for maintaining stable performance of the battery 100 and reducing the risk of thermal runaway. In addition, there is no need to separately provide heat exchange structures such as cooling plates in the housing assembly of the battery 100, which is beneficial for reducing the number of parts, lowering production costs, and improving the space utilization inside the battery 100.

By way of example, the baffle 5 may be formed integrally with the fluid bladder 1.

By way of another example, the baffle 5 may be fixedly connected to an inner wall of the accommodating cavity 11 of the fluid bladder 1 through any suitable fixing manner such as adhesion.

In some embodiments, a plurality of the baffles 5 are provided, and the plurality of baffles 5 extend along the second direction and are spaced and arranged in parallel along the third direction, where the first direction, the second direction, and the third direction are perpendicular to each other.

As shown in FIG. 6 and FIG. 7, in the embodiments of the present disclosure, the number of the baffles 5 is three. In some other embodiments, the number of the baffles 5 may alternatively be one, two, or more (more than three). The number of the baffles 5 are not specifically limited in the present disclosure and can be set according to the actual size of the fluid bladder 1.

Accordingly, by providing the baffle 5 in the accommodating cavity 11, the flow path of the fluid medium can be lengthened, so that the fluid medium to flow along the surface of the battery cell 10 along the first direction within the accommodating cavity 11 as much as possible, thereby achieving a better heat dissipation effect.

Moreover, the plurality of baffles 5 arranged in parallel can make the sizes of the spaced regions 111 separated by the baffles 5 more uniform, thereby uniformly dissipating heat from the battery cell by the fluid medium flowing through these uniform spaced regions. In addition, the structure of the baffles 5 arranged in parallel is easier to produce and process, thereby reducing production costs.

The extension length of the baffle 5 is not specifically limited in the embodiments of the present disclosure, as long as the fluid medium can flow through various parts of the accommodating cavity 11 as much as possible without affecting the flow of the fluid medium.

In the embodiments of the present disclosure, each of the baffles 5 has the same extension length, and the spacing distances between adjacent two baffles 5 along the third direction are the same. In some other embodiments, the extension lengths of each baffle 5 may alternatively be different, and the spacing distances between adjacent two baffles 5 along the third direction may alternatively be different.

In some embodiments, as shown in FIG. 5 and FIG. 6, the fluid bladder 1 includes a top wall 12, a bottom wall 13, and a plurality of side walls 14 connecting the top wall 12 and the bottom wall 13. The top wall 12, the bottom wall 13, and the plurality of side walls 14 define the accommodating cavity 11. The inlet 3 and the outlet 4 are provided on the bottom wall 13. One end of each baffle 5 is connected to an inner wall surface of the top wall 12 or the bottom wall 13, and the other end is arranged in a suspended manner.

Accordingly, the suspended end of the baffle 5 is spaced from the inner surface of the top wall 12 or the bottom wall 13 to form a gap therebetween, so as to communicate the plurality of spaced regions 111 separated by the baffle 5. In this way, the flow path of the fluid medium can be lengthened without affecting the flow of the fluid medium, thereby better dissipating heat from the battery cell 10.

However, those skilled in the art should understand that the arrangement of the baffle 5 is not limited to the above arrangement. In some other embodiments, the baffle 5 may have two ends connected to the inner wall surfaces of the top wall 12 and the bottom wall 13 respectively, and be provided with an opening at a middle portion thereof, so that the spaced regions 111 communicate with one another.

In some embodiments, along the third direction, extension directions of adjacent baffles 5 along the first direction are opposite to each other.

Specifically, the extension directions of the adjacent baffles 5 along the first direction are opposite to each other, and along the extension direction of the baffles 5, adjacent two baffles 5 partially overlap. In this way, a tortuous fluid medium flow channel can be formed with a simple structure, enabling the fluid medium to dissipate heat from the battery cell 10 more sufficiently and uniformly.

The size of the overlapping region of the baffle 5 is not specifically limited in the embodiments of the present disclosure, as long as the flow path can be extended without affecting the flow of the fluid medium.

In some embodiments, as shown in FIG. 6, along the third direction, the baffle 5 closest to the inlet 3 extends along the second direction from the inner wall surface of the bottom wall 13 toward the inner wall surface of the top wall 12; and/or along the third direction, the baffle 5 closest to the outlet 4 extends along the second direction from the inner wall surface of the bottom wall 13 toward the inner wall surface of the top wall 12.

Since the inlet 3 and the outlet 4 are provided on the bottom wall 13 of the fluid bladder 1, the baffles 5 closest to the inlet 3 and the outlet 4 extends from the inner wall surface of the bottom wall 13, so that when flowing into the accommodating cavity 11 of the fluid bladder 1 through the inlet 3, the fluid medium cannot directly flow to the outlet 4 along the third direction along the bottom wall 13 of the fluid bladder 1, but instead needs to bypass the baffle 5 and flow through the spaced region 111 defined by the baffle 5 before flowing to the outlet 4 . In this way, the flow path of the fluid medium can be extended, enabling the fluid medium to dissipate heat from the battery cell 10 more sufficiently and uniformly, while increasing the heat dissipation area and heat dissipation efficiency.

In some embodiments, as shown in FIG. 7, the baffle 5 is in sealing contact with the inner wall surfaces of two side walls 14 that are oppositely arranged along the third direction.

Accordingly, the fluid medium cannot pass through the baffle 5 during flowing, but can only flow according to the defined tortuous fluid medium flow channel, thereby better dissipating heat from the battery cell 10.

However, those skilled in the art should understand that in some other embodiments, the baffle 5 may not be completely tightly attached to the inner wall surface of the side wall 14, as long as it can be ensured that the fluid medium flows according to the tortuous fluid medium flow channel for heat exchange.

In some embodiments, the fluid bladder 1 is made of an elastic material.

The elastic material has good elasticity, such that the fluid bladder can expand or contract effectively through the flow of the fluid medium. When subjected to the swelling force released by the battery cell 10, the fluid bladder 1 can be compressed and produce elastic deformation along a direction of action of the swelling force of the battery cell 10, and can rebound after the swelling force of the battery cell 10 decreases, thereby adapting to different swelling forms of the battery cell 10. This enables the fluid bladder 1 to continuously apply an appropriate force to the surface of the battery cell 10 along the first direction, providing an appropriate swelling space for the battery cell 10 while reducing the swelling of the battery cell 10, so that the stress on the surface of the battery cell 10 along the first direction becomes more uniform, reducing the possibility of stress concentration in the battery cell 10, and effectively improving the performance of the battery 100.

The baffle 5 disposed in the fluid bladder 1 may also be made of an elastic material. In this way, the baffle 5 can deform together with the expansion or contraction of the fluid bladder 1, thereby better blocking the fluid medium in the accommodating cavity 11, so that the fluid medium can always flow according to the defined flow path.

In some embodiments, the elastic material includes elastic rubber.

Elastic rubber has good elasticity and is easy to mold, which can effectively reduce processing costs. In addition, elastic rubber has good wear resistance and anti-aging properties, which can improve the service performance of the fluid bladder 1.

However, those skilled in the art should understand that the elastic material is not limited to rubber only, and the fluid bladder 1 can also be made of any other suitable elastic material.

In some embodiments, in each pressure control unit 20, within the same projected area perpendicular to the first direction, a projected area of the fluid bladder 1 is greater than a projected area of the electrode assembly in the battery cell 10.

Accordingly, the fluid bladder 1 can more effectively restrain the swelling of the battery cell 10, reducing the possibility of undesirable situations such as wrinkling of the electrode sheets of the electrode assembly due to free swelling of the battery cell 10, thereby maintaining the cycle life of the battery 100 and the good performance of the battery 100.

In some embodiments, along the first direction, the pressure control unit 20 is disposed adjacent to at least one of the surfaces of the battery cell 10 facing the first direction.

In the initial state, that is, when the battery cell 10 has not yet swelled, the adjacent arrangement may mean that the pressure control unit 20 is disposed in contact with the battery cell 10, or that the pressure control unit 20 is disposed close to but not in contact with the battery cell 10. The embodiments of the present disclosure do not specifically limit this, as long as at least when the battery cell 10 swells, the pressure control unit 20 can apply a force to the battery cell 10 to control the swelling degree of the battery cell 10.

Since the battery cell 10 usually swells along the stacking direction (first direction) of the electrode assemblies, at least when the battery cell 10 swells, the pressure control unit 20 being disposed adjacent to at least one of the surfaces of the battery cell 10 facing the first direction can apply a swelling restraining force to the surface of the battery cell 10 facing the first direction, thereby controlling the swelling degree of the battery cell 10.

In some embodiments, a plurality of the battery cells 10 are provided, and the plurality of battery cells 10 are arranged along the first direction. The pressure control unit 20 is disposed between adjacent battery cells 10, and/or between the battery cell 10 and an inner wall of the housing assembly 30 adjacent to the battery cell 10.

Accordingly, one pressure control unit 20 can simultaneously apply forces to adjacent battery cells 10, and may also apply an appropriate force to the surface of the battery cell 10 adjacent to the housing assembly 30 facing the first direction, thereby helping to provide an appropriate swelling force for the battery cell, which is beneficial for improving the performance of the battery.

Moreover, allowing adjacent battery cells 10 to share one pressure control unit 20 helps reduce the number of parts. Since the pressure control unit 20 can be disposed between the inner wall of the housing assembly 30 and the battery cell 10 adjacent to the inner wall, a swelling restraining force can also be applied to the surface of the battery cell 10 adjacent to the inner wall. Therefore, swelling restraint and pressure control can be applied to the large surfaces of each battery cell 10 accommodated in the housing assembly 30.

In some embodiments, as shown in FIG. 3 and FIG. 4, the pressure control unit 20 may alternatively be disposed between every two adjacent battery cells 10, and/or at least two of the battery cells 10 form a battery cell group, the pressure control unit 20 is disposed between two of the battery cell groups, and/or the pressure control unit 20 is disposed between the battery cell group and the battery cell 10 adjacent to the battery cell group.

Accordingly, the pressure control unit 20 can be arranged at different positions within the housing assembly 30 according to different situations of the battery cells 10. For example, when the thickness of a single battery cell 10 is relatively large, in order to ensure the average stress on the surface of the battery cell 10 facing the first direction, the pressure control unit 20 may apply a force to only one battery cell 10 through the side facing the first direction. When the thickness of a single battery cell 10 is small, the pressure control unit 20 may simultaneously apply forces to a plurality of battery cells 10 through the side facing the first direction, thereby effectively reducing the swelling of the battery cell 10.

The number of battery cells 10 on two sides of the pressure control unit 20 facing the first direction may be the same or different. The embodiments of the present disclosure do not specifically limit the number of battery cells 10 on two sides of the pressure control unit 20 facing the first direction, as long as the average stress on the surfaces of these battery cells 10 facing the first direction can be within a preset range.

In some embodiments, the battery cell 10 is a pouch battery cell or a prismatic battery cell.

Pouch battery cells are usually encapsulated by a soft aluminum-plastic packaging film and have poor resistance to deformation. Therefore, pouch battery cells are more prone to swelling during the charge-discharge process. However, in the embodiments of the present disclosure, by providing the pressure control unit 20, the swelling of pouch battery cells can be effectively reduced, thereby reducing the occurrence of undesirable phenomena such as lithium plating caused by excessive swelling of pouch battery cells and improving the charge-discharge cycle life of the battery 100 and the performance of the battery 100.

Prismatic battery cells may also swell during the charge-discharge process, and the pressure control unit 20 can similarly apply a force to the prismatic battery cell to control the swelling degree of the prismatic battery cell.

However, those skilled in the art should understand that the battery cell 10 is not limited to pouch battery cells and prismatic battery cells. The pressure control unit 20 in the embodiments of the present disclosure may also be used to control the swelling degree of other battery cells or the like.

As shown in FIG. 5, according to a second aspect of the present disclosure, a pressure control unit 20 is provided. The pressure control unit 20 is configured for a battery 100. The battery 100 includes at least one battery cell 10. The battery cell 10 includes electrode assemblies stacked along a first direction. The battery cell 10 includes surfaces facing each other along the first direction. The pressure control unit 20 includes a fluid bladder 1, an accommodating cavity 11 is formed inside the fluid bladder 1, the accommodating cavity 11 accommodates a fluid medium, and the fluid bladder 1 can contract or expand through flow of the fluid medium to apply the force to the battery cell 10 through fluid pressure generated by the fluid medium, where the pressure control unit 20 is configured to apply a force to the battery cell 10, at least when the battery cell 10 swells, to control stress on a surface of the swollen battery cell 10.

The pressure control unit 20 can at least apply a force to the battery cell 10 when the battery cell 10 swells, thereby reducing the swelling of the battery cell 10. Moreover, the pressure control unit 20 configured as the fluid bladder 1 can adjust the degree of contraction or expansion by changing the flow of the fluid medium according to the swelling degree of the battery cell 10, providing an appropriate swelling space for the battery cell 10, so that the swelling force of the battery cell 10 can be uniformly released, reducing polarization accumulation of the battery cell 10, which is beneficial for improving the performance of the battery 100 and the charge-discharge cycle life.

In some embodiments, a maximum pressure that the pressure control unit 20 can apply is within a range from 200 N to 4000 N.

Accordingly, the pressure control unit 20 can apply a large swelling restraining force to the battery cell 10 and control the swelling restraining force to be within an appropriate range, thereby effectively resisting the swelling force of the battery cell 10. Even when the swelling force of the battery cell 10 is relatively large, the average stress on the surface (for example, a large surface) of the battery cell 10 can still be maintained within an appropriate range. Moreover, since the maximum pressure that the pressure control unit 20 can apply is relatively large, it is less likely that elastic failure occurs such that the pressure control unit cannot rebound and thus cannot continue to provide an appropriate swelling restraining force to the battery cell 10.

In some embodiments, the fluid bladder 1 includes an inlet 3 and an outlet 4. The inlet 3 and the outlet 4 are in communication with the accommodating cavity 11. The inlet 3 is configured for the fluid medium to flow into the accommodating cavity 11 from outside. The outlet 4 is configured for the fluid medium to flow out of the accommodating cavity 11. The fluid bladder 1 can expand or contract through inflow or outflow of the fluid medium.

Accordingly, it is possible to flow the fluid medium into or out of the accommodating cavity 11 according to the swelling degree of the battery cell 10, and adjust the force applied to the surface of the battery cell 10 through different pressures generated by different amounts of fluid medium, so that while the swelling of the battery cell 10 is limited, an appropriate swelling space can be provided for the battery cell 10, making the stress on the surface of the battery cell uniform.

In addition, circulation of the fluid medium inside the accommodating cavity 11 can be achieved through the inlet 3 and the outlet 4, thereby carrying away the heat from the battery cell 10 to achieve heat exchange while reducing the swelling of the battery cell 10. In this way, pressure management and temperature management are integrated, without the need to provide additional heat exchange structures, effectively saving space and reducing weight.

In some embodiments, as shown in FIG. 6, the fluid bladder 1 further includes at least one baffle 5. The baffle 5 is located in the accommodating cavity 11 and is configured to divide the accommodating cavity 11 into at least two spaced regions 111, and the spaced regions 111 are in communication with each other and form a tortuous fluid medium flow channel.

Accordingly, the flow path of the fluid medium in the accommodating cavity 11 is lengthened, so that the fluid medium can flow through more parts in the accommodating cavity 11 via the tortuous fluid medium flow channel, thereby increasing the heat dissipation area on the surface of the battery cell 10 and further improving the heat dissipation efficiency.

As shown in FIG. 2, according to a third aspect of the present disclosure, a battery pack 400 is provided. The battery pack 400 includes an enclosure 401 and at least one battery 100 according to the first aspect of the present disclosure, the battery 100 being accommodated in the enclosure 401.

Since the batteries 100 according to the first aspect of the present disclosure can be used in groups, a higher total energy can be provided.

Moreover, in the battery pack 400 provided in the embodiments of the present disclosure, since battery cells 10 provided with pressure control units 20 are adopted, an average stress on the large surfaces of the battery cells 10 is maintained within an appropriate range and exhibits good uniformity, and the risk of stress concentration is reduced. Therefore, the risk of reduced charge-discharge cycle life of the battery pack 400 due to swelling of the battery cells 10 is reduced.

According to a fourth aspect of the present disclosure, a power consuming device is provided. The power consuming device including the battery 100 according to the first aspect of the present disclosure for supplying electrical energy or the battery pack 400 according to the third aspect of the present disclosure.

The power consuming device in the embodiments of the present disclosure adopts the battery pack 400 with good performance as described above, thereby reducing the time spent on maintenance and reducing the risk that the power consuming device fails due to failure of the battery pack 400.

According to a fifth aspect of the present disclosure, an energy storage device is provided. The energy storage device includes the battery 100 according to the first aspect of the present disclosure for storing electrical energy or supplying electrical energy or the battery pack 400 according to the third aspect of the present disclosure.

The energy storage device in the embodiments of the present disclosure adopts the battery pack 400 with good performance as described above, thereby reducing the time spent on maintenance and reducing the risk that the power consuming device fails due to failure of the battery pack 400.

Below, specific examples of some embodiments of the present disclosure are described with reference to the accompanying drawings.

As a specific example, the battery 100 includes cells (battery cells 10) and pressure control structures (pressure control units 20). The pressure control structures are airbags. The cells are pouch cells, and the pressure control structure may be arranged between two cells. The pressure control structure covers the large surface (surface facing the first direction) of the winding/lamination structure (electrode assembly) inside the cell, and needs to cover at least more than 50% of the area of the large surface of the winding/lamination structure inside the cell. One or more cells are respectively arranged on two sides of the pressure control structure facing the first direction, such that the pressure control structure can simultaneously control swelling degree of the cells on two sides. In this arrangement, it is optimal that two cells are arranged on one side of the pressure control structure.

The pressure control structure of the airbag structure includes an air inlet (inlet 3) and an air outlet (outlet 4) interacting with the outside. The air inlet is used to inject gas or liquid (fluid medium) into the airbag. By regulating gas pressure or liquid pressure, a thickness of the airbag and pressure applied to the cell are controlled, so that an average stress on the large surface of the cell is maintained within a range from 0.1 MPa to 2 MPa. In addition, for the same surface of a single cell, a value of a minimum stress calculated per unit area divided by a maximum stress calculated per unit area at a same moment is greater than 50%, thereby ensuring the uniformity of the stress on the large surface of the cell.

Isolation bars (baffles 5) are arranged inside the airbag. By designing different notch positions of the isolation bars, the gas or liquid introduced into the airbag can flow inside the airbag along a tortuous flow channel (flow path of the fluid medium), so that uniform cooling and heat dissipation can be performed for the large surface of the cell. The number of isolation bars inside the airbag is at least one, and an upper limit may be determined according to actual size and needs. The isolation bars are firmly attached to the inner wall surface of the airbag, being tightly sealed with at least the inner wall surface of the large surface, so as to ensure that the gas or liquid flows for cooling along the flow channel.

The above embodiments are merely intended for describing the technical solutions of the present disclosure but not for limiting the present disclosure. Although the present disclosure has been described in detail with reference to the above embodiments, those of ordinary skill in the art should understand that modifications can still be made to the technical solutions described in the above embodiments, or equivalent replacements can be made to some or all of the technical features; and these modifications or replacements do not make the essence of the corresponding technical solutions deviate from the scope of the technical solutions of the embodiments of the present disclosure, and they should all be covered within the scope of the present disclosure. In particular, as long as there is no structural conflict, the various technical features mentioned in the various embodiments can be combined in any manner.

## Claims

1. A battery, wherein the battery comprises:
a housing assembly;
at least one battery cell accommodated in the housing assembly, the battery cell comprising electrode assemblies stacked along a first direction; and
at least one pressure control unit, the pressure control unit comprising a fluid bladder, an accommodating cavity being formed inside the fluid bladder, the accommodating cavity accommodating a fluid medium, and the fluid bladder being capable of contracting or expanding through flow of the fluid medium to apply a force to the battery cell through fluid pressure generated by the fluid medium;
wherein the pressure control unit applies the force to the battery cell, at least when the battery cell swells, to control stress on a surface of the swollen battery cell.

2. The battery according to claim 1, wherein
the battery cell comprises surfaces facing each other along the first direction, and
at least when the battery cell swells, an average stress on the same surface of the same battery cell is within a range from 0.1 MPa to 2 MPa.

3. The battery according to claim 1 or 2, wherein
for the same surface of the same battery cell, a value of a minimum stress calculated per unit area divided by a maximum stress calculated per unit area at a same moment is greater than 50%.

4. The battery according to any one of claims 1 to 3, wherein
a maximum pressure that the pressure control unit is capable of applying is within a range from 200 N to 4000 N.

5. The battery according to any one of claims 1 to 4, wherein
the fluid bladder comprises an inlet and an outlet, wherein the inlet and the outlet are in communication with the accommodating cavity, the inlet is configured for the fluid medium to flow into the accommodating cavity from outside, and the outlet is configured for the fluid medium to flow out of the accommodating cavity; and
the fluid bladder is capable of expanding or contracting through inflow or outflow of the fluid medium.

6. The battery according to claim 5, wherein
the battery further comprises a top cover assembly, the top cover assembly being located on one side of the housing assembly along a second direction, and the inlet and the outlet being arranged to face an opposite side in the second direction from the top cover assembly; and
the second direction being perpendicular to the first direction.

7. The battery according to any one of claims 1 to 6, wherein
the fluid bladder further comprises at least one baffle, the baffle being located in the accommodating cavity and configured to divide the accommodating cavity into at least two spaced regions, and the spaced regions being in communication with each other and forming a tortuous fluid medium flow channel.

8. The battery according to claim 7, wherein
a plurality of baffles are provided, and the plurality of baffles extend along a second direction and are spaced apart in parallel along a third direction;
wherein the first direction, the second direction, and the third direction are perpendicular to each other.

9. The battery according to claim 8, wherein
the fluid bladder comprises a top wall, a bottom wall, and a plurality of side walls connecting the top wall and the bottom wall, the top wall, the bottom wall, and the plurality of side walls defining the accommodating cavity;
the inlet and the outlet are provided in the bottom wall; and
one end of each of the baffles is connected to an inner wall surface of the top wall or the bottom wall, and the other end is arranged in a suspended manner.

10. The battery according to claim 9, wherein
along the third direction, extension directions of adjacent baffles along the first direction are opposite to each other.

11. The battery according to claim 10, wherein
along the third direction, the baffle closest to the inlet extends along the second direction from the inner wall surface of the bottom wall toward the inner wall surface of the top wall; and/or
along the third direction, the baffle closest to the outlet extends along the second direction from the inner wall surface of the bottom wall toward the inner wall surface of the top wall.

12. The battery according to any one of claims 9 to 11, wherein
the baffle is in sealing contact with inner wall surfaces of two of the side walls that are oppositely arranged along the third direction.

13. The battery according to any one of claims 1 to 12, wherein
the fluid bladder is made of an elastic material.

14. The battery according to claim 13, wherein
the elastic material comprises elastic rubber.

15. The battery according to any one of claims 1 to 14, wherein
in each of the pressure control units, within a same projected area perpendicular to the first direction, a projected area of the fluid bladder is greater than a projected area of the electrode assembly in the battery cell.

16. The battery according to any one of claims 1 to 15, wherein
along the first direction, the pressure control unit is disposed adjacent to at least one of the surfaces of the battery cell facing the first direction.

17. The battery according to claim 16, wherein
a plurality of battery cells are provided, and the plurality of battery cells are arranged along the first direction; and
the pressure control unit is disposed between adjacent battery cells, and/or between the battery cell and an inner wall of the housing assembly adjacent to the battery cell.

18. The battery according to claim 17, wherein
the pressure control unit is disposed between every two adjacent battery cells; and/or
at least two of the battery cells form a battery cell group, and the pressure control unit is disposed between two of the battery cell groups; and/or
the pressure control unit is disposed between the battery cell group and the battery cell adjacent to the battery cell group.

19. The battery according to any one of claims 1 to 18, wherein
the battery cell comprises a pouch battery cell or a prismatic battery cell.

20. A pressure control unit for a battery, wherein
the battery comprises at least one battery cell, the battery cell comprising electrode assemblies stacked along a first direction, and the battery cell comprising surfaces facing each other along the first direction;
the pressure control unit comprises a fluid bladder, an accommodating cavity being formed inside the fluid bladder, the accommodating cavity accommodating a fluid medium, and the fluid bladder being capable of contracting or expanding through flow of the fluid medium to apply a force to the battery cell through fluid pressure generated by the fluid medium;
wherein the pressure control unit is configured to apply a force to the battery cell, at least when the battery cell swells, to control stress on a surface of the swollen battery cell.

21. The pressure control unit according to claim 20, wherein
a maximum pressure that the pressure control unit is capable of applying is within a range from 200 N to 4000 N.

22. The pressure control unit according to claim 20 or 21, wherein
the fluid bladder comprises an inlet and an outlet, the inlet and the outlet being in communication with the accommodating cavity, the inlet being configured for the fluid medium to flow into the accommodating cavity from outside, and the outlet being configured for the fluid medium to flow out of the accommodating cavity; and
the fluid bladder is capable of expanding or contracting through inflow or outflow of the fluid medium.

23. The pressure control unit according to any one of claims 20 to 22, wherein
the fluid bladder further comprises at least one baffle, the baffle being located in the accommodating cavity and configured to divide the accommodating cavity into at least two spaced regions, and the spaced regions being in communication with each other and forming a tortuous fluid medium flow channel.

24. A battery pack, the battery pack comprising:
an enclosure; and
at least one battery according to any one of claims 1 to 19, the battery being accommodated in the enclosure.

25. A power consuming device, wherein the power consuming device comprises the battery according to any one of claims 1 to 19 or the battery pack according to claim 24 for supplying electrical energy.

26. An energy storage device, the energy storage device comprising the battery according to any one of claims 1 to 19 or the battery pack according to claim 24 for storing electrical energy or supplying electrical energy.
